# FASCICULE DE BREVET EUROPEEN

(11) **EP 2 475 531 B1**
(45) Date de publication et mention de la délivrance du brevet: **30.04.2014**
(21) Numéro de dépôt: 10770547.7
(22) Date de dépôt: 10.09.2010
(51) Int. Cl.: B62D 7/18

(54) **TRAIN ROULANT NOTAMMENT POUR VEHICULE AUTOMOBILE**
ACHSE, INSBESONDERE FÜR EIN KRAFTFAHRZEUG
RUNNING GEAR, PARTICULARLY FOR A MOTOR VEHICLE

(30) Priorité: 11.09.2009 FR 0956265
(43) Date de publication de la demande: 18.07.2012
(73) Titulaire: Peugeot Citroën Automobiles SA, 78140 Vélizy-Villacoublay (FR)
(72) Inventeur: POUILLAUDE, Eric, F-91400 Orsay (FR); GRYZ, Gilbert, F-93600 Aulnay Sous Bois (FR)
(86) Numéro de dépôt international: PCT/FR2010/051891
(87) Numéro de publication internationale: WO 2011/030073

(56) Documents cités:
- EP-A2- 1 564 036
- WO-A1-01/74647
- DE-A1- 1 755 511
- DE-A1- 10 209 109
- DE-C1- 4 038 917
- FR-A7- 2 135 784
- US-A- 3 154 164
- US-B1- 6 416 136

## Description

La présente invention concerne un train roulant pour un véhicule automobile, comprenant un dispositif de liaison des moyeux de roue sur ce train, ainsi qu'un véhicule automobile équipé de ce train roulant.

Les véhicules automobiles disposent de trains roulant avant et arrière comprenant généralement une traverse ou un berceau reliant les deux côtés du véhicule, fixé à la caisse de ce véhicule, qui supporte les roues de ce train. Les trains roulants assurent d'autres fonctions comme la suspension, le filtrage des vibrations, la direction ou le freinage des roues.

Chaque roue est reliée à son train roulant par un pivot qui assure un guidage en rotation de la roue autour de son axe.

Chaque train roulant du véhicule comporte des caractéristiques géométriques propres, comprenant notamment la voie ou distance transversale entre les deux roues, la hauteur de ce train par rapport à l'axe de la roue, et l'angle de carrossage que forme dans un plan perpendiculaire à l'axe longitudinal du véhicule, le plan de la roue avec la verticale.

Les caractéristiques géométriques des trains roulants ont un rôle important pour obtenir les qualités de fonctionnement du véhicule recherchées, en particulier dans les domaines de la tenue de route, de la motricité et du freinage. Ces caractéristiques géométriques concernent aussi la garde au sol du véhicule.

Les caractéristiques géométriques permettent en particulier de typer le véhicule en fonction de données variables comme la masse totale, sa répartition avant et arrière, ainsi que les performances souhaitées. Ces caractéristiques géométriques se diversifient avec le nombre de typages, pour obtenir les meilleurs résultats.

Il est par ailleurs connu de réaliser des familles de véhicules en utilisant une plateforme commune, sur laquelle sont adaptés différents types de carrosserie répondant à des styles différents ou à des usages variés, et comprennent des caractéristiques géométriques spécifiques des trains roulants.

Cette méthode permet de réaliser des plateformes en grande série, comprenant notamment des organes mécaniques standards comme la motorisation ou les trains roulants, qui sont produits à des coûts intéressants grâce à des investissements importants dans des moyens de production très automatisés. Elle permet aussi de proposer différents types de carrosserie qui peuvent être produits en petites ou moyennes séries, pour répondre à des demandes variées.

Un problème qui se pose alors est de réaliser avec des moyens de production prévus pour des grandes séries, des trains roulants adaptés pour les différents types de véhicules, et comprenant pour chaque type des caractéristiques géométriques spécifiques.

Il est possible de prévoir par exemple des porte-moyeux différents, comprenant des dimensions adaptées pour réaliser une géométrie spécifique de la roue en fonction des besoins de chaque type de véhicule. Mais dans ce cas il faut produire une variété de porte-moyeux, ce qui entraîne des coûts de production plus élevés.

Il est aussi connu du document DE-C1-40 38917 un train roulant selon le préambule de la revendication 1 notamment pour véhicule automobile, comprenant symétriquement une roue supportée par un pivot d'un porte-moyeu qui est relié à des éléments de suspension de ce train, le porte-moyeu comprenant des dimensions donnant une certaine géométrie de positionnement de la roue. Le porte-moyeu est composé en deux parties dont le positionnement d'une des parties peut être modifié par rapport à l'autre pour donner une géométrie de positionnement différente de la roue de ce train. Mais un tel changement de position de ces deux parties du porte-moyeu ne permet qu'une variation de la garde au sol du véhicule, sans pouvoir réaliser d'autres géométries de positionnement des roues.

La présente invention a notamment pour but d'éviter ces inconvénients de la technique antérieure, et de proposer un train roulant de véhicule permettant de manière simple et économique, de réaliser différentes géométries de positionnement des roues.

Elle propose à cet effet un train roulant notamment pour véhicule automobile, conformément à l'objet de la revendication 1.

De plus le train roulant selon l'invention peut comporter une ou plusieurs des caractéristiques suivantes, qui peuvent être combinées entre elles.

Le retournement par rapport au plan horizontal du porte-moyeu lors de l'échange de côté, peut aussi entraîner un décalage de hauteur entre le centre du pivot et les éléments de suspension.

Une entretoise comportant une épaisseur constante, peut être intercalée entre le porte-moyeu et la face d'appui du support.

Avantageusement, le porte-moyeu ainsi que l'entretoise si elle est présente, sont fixés au support par des vis de fixation perpendiculaires à la face d'appui de ce support.

Avantageusement, les mêmes perçages des porte-moyeux, servent indifféremment pour un montage de chaque porte-moyeu du côté droit ou gauche du véhicule.

L'invention a aussi pour objet un véhicule automobile disposant d'un train roulant comprenant deux roues supportées chacune par un pivot d'un porte-moyeu, ce train roulant comportant de plus l'une quelconque des caractéristiques précédentes.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 présente une vue en perspective d'un porte-moyeu et de son support selon l'invention ;
- la figure 2 présente en vue arrière une coupe axiale du support, de l'entretoise et d'un des porte-moyeux disposés du côté droit véhicule, et
- la figure 3 présente en vue arrière une coupe axiale des mêmes support et entretoise, et de l'autre porte-moyeu, disposés aussi du côté droit du véhicule.

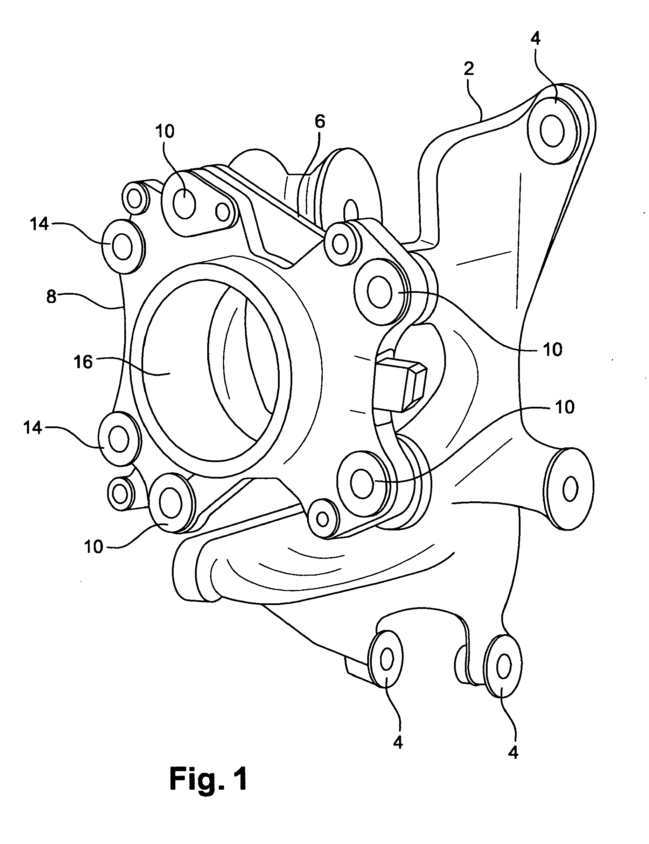

La figure 1 présente un support 2 réalisé en fonderie, qui comporte des perçages 4 pour des fixations articulées d'extrémités de bras de suspension non représentés. Les autres extrémités de ces bras de suspension sont reliées aussi par des articulations, à une traverse ou un berceau d'un train roulant du véhicule, pour permettre un débattement sensiblement vertical du support 2 lors du travail de la suspension.

Le support 2 comporte une face d'appui extérieure plane disposée sensiblement perpendiculairement à un axe transversal du véhicule, qui reçoit successivement une entretoise plate 6, et un porte-moyeu 8 comprenant un alésage 16.

L'alésage 16 du porte-moyeu 8 est sensiblement perpendiculaire à la face d'appui du support 2, et reçoit un roulement non représenté qui guide en rotation un moyeu supportant une roue du train roulant.

Des perçages 10 disposés perpendiculairement à la face d'appui, sont réalisés sur le porte-moyeu 8 et l'entretoise 6 de manière alignée, pour permettre l'introduction de vis de serrage qui serrent ensemble ces deux composants sur le support 2 contenant des taraudages recevant ces vis.

Le porte-moyeu 8 comporte de plus tournés vers l'arrière du véhicule, deux perçages 14 qui reçoivent des vis de fixation d'un étrier de freinage non représenté, venant serrer un disque de frein lié au moyeu de la roue.

Sur un même véhicule, les deux porte-moyeux 8 droit et gauche sont symétriques par rapport au plan vertical médian passant par l'axe longitudinal du véhicule. Les deux porte-moyeux 8 comportent chacun un alésage 16 du roulement de guidage de la roue, disposé pour donner une certaine géométrie de positionnement de ces roues, notamment en ce qui concerne leur hauteur par rapport à la caisse du véhicule, et leur angle de carrossage.

Les différents perçages 10, 14 de fixation du porte-moyeu 8 sur le support 2, ou de l'étrier de frein sur ce porte-moyeu, sont disposés symétriquement par rapport à un plan horizontal passant à proximité de l'axe du moyeu de roue. Cette disposition permet lors d'un échange de côté entre les porte-moyeux 8 droit et gauche, de retourner chaque porte-moyeu par rapport à ce plan horizontal, pour réaliser une inversion entre le haut et le bas.

On obtient aussi après un échange de côté des porte-moyeux 8 comprenant un retournement, une nouvelle disposition des alésages 16 de ces porte-moyeux par rapport à leur support 2, ce qui donne une géométrie de positionnement des roues différente.

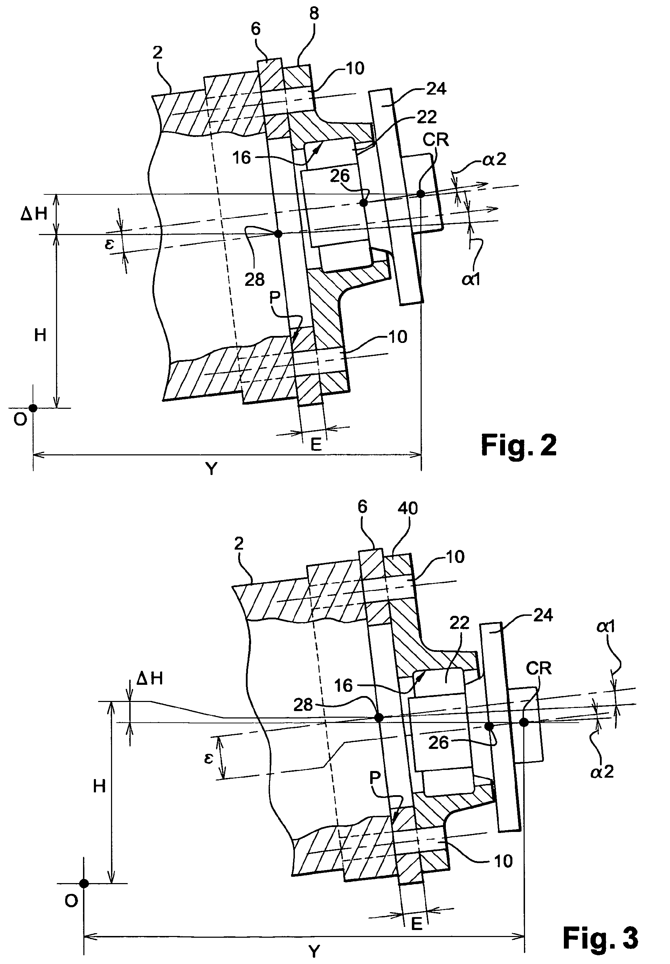

La figure 2 présente pour le côté droit du véhicule, le support 2 recevant sur sa face d'appui P, l'entretoise 6 comportant une épaisseur constante E entre deux faces parallèles, cette entretoise recevant à son tour le porte-moyeu 8. Les vis de fixation du porte-moyeu 8 et de l'entretoise 6, traversent les perçages 10 alignés de ces deux composants, qui sont perpendiculaires à la face d'appui P du support 2.

Le porte-moyeu 8 reçoit dans son alésage 16, un roulement 22 qui guide le moyeu de roue 24. Le moyeu de roue 24 supporte une roue non représentée, comportant un centre de roue CR qui est le point d'intersection entre l'axe de la roue, et le plan médian du pneumatique de cette roue.

On a une première possibilité de réglage de la voie du train roulant, en modifiant l'épaisseur E de l'entretoise 6, ou en ne montant pas d'entretoise, ce qui modifie la distance Y entre une origine O de la carrosserie placée sur le plan médian du véhicule, et le centre de roue CR.

Ces réglages de la voie se faisant en conservant les porte-moyeux 8 du même côté du véhicule, sont possibles car les perçages 10 des vis de fixation étant perpendiculaires à la face d'appui P, ces vis de fixation peuvent toujours être montées quelque soit l'épaisseur E de l'entretoise 6.

Le porte-moyeu 8 comprend un décalage de hauteur ε vers le haut, qui est le décalage sur le plan de la face d'appui P, entre le centre 26 du roulement 22, et le milieu 28 des perçages de fixation 10. Le décalage de hauteur ε entraîne une position de la roue plus haute par rapport à la caisse du véhicule, suivant une valeur proche de cette valeur de décalage ε.

La perpendiculaire à la face d'appui P du pivot 2, est inclinée suivant un angle α1 par rapport à un plan horizontal, cet angle α1 dirigé vers le haut définissant un angle de carrossage de base pour les roues. De plus le porte-moyeu 8 comprend aussi un petit décalage angulaire α2 vers le haut, entre l'axe du moyeu 24 et une perpendiculaire à la face d'appui P.

L'angle de carrossage réel de la roue droite est donc égal à la somme α1 + α2 des deux angles définis ci-dessus.

On notera que la hauteur réelle du centre de roue CR par rapport au milieu 28 des perçages de fixation 10, soit ΔH, dépend principalement du décalage ε, mais aussi des angles α1 et α2, et des déports latéraux entre ce centre de roue CR, et le centre 26 du roulement 22 ou la face d'appui P du support 2.

La valeur ΔH s'ajoute à la valeur H qui représente la hauteur sur le plan P du centre des perçages 10, par rapport au point d'origine O de la carrosserie, pour obtenir la hauteur totale du centre de roue CR par rapport à ce point d'origine.

Pour la roue gauche, son porte-moyeu étant le symétrique du porte-moyeu droit par rapport au plan médian du véhicule, elle comporte une géométrie de positionnement similaire à celle de la roue droite, notamment la hauteur du centre de roue CR et l'angle de carrossage.

La figure 3 présente pour le même côté droit du véhicule, le support 2 recevant l'entretoise 6 d'épaisseur E, et le porte-moyeu 40 venant du côté gauche du véhicule, après avoir échangé de côté les porte-moyeux avec un retournement entre le haut et le bas.

Le décalage de hauteur ε sur le plan de la face d'appui P, entre le centre 26 du roulement 22, et le milieu 28 des perçages de fixation 10, est dirigé maintenant vers le bas avec le retournement du porte-moyeu 40.

De plus le petit décalage angulaire α2 du porte-moyeu 40, entre l'axe du moyeu 24 et la perpendiculaire à la face d'appui P du support 2, est maintenant tourné vers le bas. L'angle de carrossage réel de la roue droite est donc égal à la différence α1 - α2 des deux angles définis ci-dessus. On a ainsi deux angles de carrossage possibles, qui oscillent avec une valeur α2 autour de l'angle de base α1, l'écart entre ces deux angles de carrossage représente donc un double décalage d'angle α2.

On obtient de la même manière une valeur ΔH de hauteur réelle du centre de roue CR par rapport au milieu 28 des perçages de fixation 10, qui est négative, et qui se retranche de la valeur H pour obtenir la hauteur totale du centre de roue CR par rapport au point d'origine O de la carrosserie.

On notera que la distance Y entre l'origine O de la carrosserie et le centre de roue CR, ne change quasiment pas, une très faible variation se produisant toutefois avec les modifications de positionnement du moyeu 24 par rapport au support 2.

Pour la roue gauche, son porte-moyeu étant toujours le symétrique du porte-moyeu droit 40 par rapport au plan médian, après l'échange des deux porte-moyeux, elle comporte une géométrie de positionnement similaire à celle de la roue droite.

On obtient ainsi avec un seul jeu de porte-moyeux 8, 40, qui peut être produit en grande série, en inversant simplement les côtés de montage de ces porte-moyeux, différentes possibilités de réglage, notamment de la hauteur de la carrosserie et de l'angle de carrossage des roues.

Ce procédé de montage comprenant une inversion de côté, ne nécessite pas de stockage de pièces supplémentaires, la place nécessaire ainsi que les coûts de production n'augmentent pas. On peut réaliser différents types de véhicules comportant des caractéristiques géométriques variées du train avant ou arrière, de manière économique.

## Revendications

1. Train roulant notamment pour véhicule automobile, comprenant deux roues supportées chacune par un pivot (22) d'un porte-moyeu différent suivant le côté droit (8) ou gauche (40) du véhicule, qui est relié à des éléments de suspension de ce train, ces porte-moyeux (8, 40) comprenant des dimensions donnant une certaine géométrie de positionnement des roues, que les deux porte-moyeux droit (8) et gauche (40) pouvant être échangés entre eux pour être montés de l'autre côté du véhicule, et donner une géométrie de positionnement différente des roues de ce train, faisant que lors d'un échange de côté entre les porte-moyeux droit (8) et gauche (40), caractérisé en ce chaque porte-moyeu est retourné par rapport à un plan horizontal pour réaliser une inversion entre le haut et le bas de ce porte-moyeu, entraînant un double décalage d'angle (α2) entre l'axe du pivot (22) et les éléments de suspension, le porte-moyeu (8, 40) étant fixé sur un support (2) relié aux éléments de suspension, ce support comportant une face d'appui (P) recevant ce porte-moyeu (8, 40), dont la perpendiculaire est inclinée par rapport à un plan horizontal, suivant un angle (α1) définissant un angle de carrossage de base pour les roues, auquel peut s'ajouter ou se retrancher ledit décalage d'angle (α2).

2. Train roulant selon la revendication 1, **caractérisé en ce que** le retournement par rapport au plan horizontal du porte-moyeu (8, 40) lors de l'échange de côté, entraîne un décalage de hauteur entre le centre (26) du pivot (22) et les éléments de suspension.

3. Train roulant selon la revendication 1 ou 2, **caractérisé en ce qu'**une entretoise (6) comportant une épaisseur constante (E), est intercalée entre le porte-moyeu (8, 40) et la face d'appui (P) du support (2).

4. Train roulant selon l'une quelconque des revendications précédentes, **caractérisé en ce que** le porte-moyeu (8, 40) ainsi que l'entretoise (6) si elle est présente, sont fixés au support (2) par des vis de fixation perpendiculaires à la face d'appui (P) de ce support.

5. Train roulant selon la revendication 4, **caractérisé en ce que** les mêmes perçages (10) des porte-moyeux (8, 40), servent indifféremment pour un montage de chaque porte-moyeu du côté droit ou gauche du véhicule.

6. Véhicule automobile comportant un train roulant comprenant deux roues supportées chacune par un pivot (2) d'un porte-moyeu (8, 40), **caractérisé en ce que** ce train roulant est réalisé suivant l'une quelconque des revendications précédentes.

## Patentansprüche

1. Fahrwerk, insbesondere für ein Kraftfahrzeug, umfassend zwei Räder, die jeweils von einem Drehzapfen (22) eines verschiedenen Nabenträgers entlang der rechten (8) oder der linken (40) Seite des Fahrzeugs getragen werden, verbunden mit Aufhängungselementen dieses Fahrwerks, wobei diese Nabenträger (8, 40) Abmessungen aufweisen, die zu einer bestimmten Geometrie der Positionierung der Räder führen, wobei die zwei rechten (8) und linken (40) Nabenträger untereinander ausgetauscht werden können, um auf der anderen Seite des Fahrzeugs montiert zu werden und zu einer verschiedenen Geometrie der Positionierung der Räder dieses Fahrwerks zu führen, wodurch erreicht wird, dass bei einem Austausch zwischen dem rechten (8) und dem linken Nabenträger (40) **dadurch gekennzeichnet, dass** jeder Nabenträger mit Bezug auf eine horizontale Ebene umgekehrt wird, um eine Umkehrung zwischen der oberen Seite und der unteren Seite dieses Nabenträgers durchzuführen, die eine doppelte Winkelverschiebung (α2) zwischen der Schwenkachse (22) und den Aufhängungselementen verursacht, wobei der Nabenträger (8, 40) auf einem Träger (2) befestigt ist, der mit den Aufhängungselementen verbunden ist, wobei dieser Träger eine Auflageseite (P) umfasst, die diesen Nabenträger aufnimmt (8, 40), dessen Lotrechte mit Bezug auf die horizontale Ebene gemäß einem Winkel (α1) geneigt ist, der einen Basis-Krümmungswinkel für die Räder definiert, zu dem/von dem die Winkelabweichung (α2) hinzugefügt oder abgezogen werden kann.

2. Fahrwerk nach Anspruch 1, **dadurch gekennzeichnet, dass** die Rückkehr mit Bezug auf die horizontale Ebene des Nabenträgers (8, 40) beim Austausch der Seite zu einer Verschiebung der Höhe zwischen der Mitte (26) des Drehzapfens (22) und den Aufhängeelementen führt.

3. Fahrwerk nach Anspruch 1 oder 2, **dadurch gekennzeichnet, dass** ein Abstandhalter (6) mit einer konstanten Dicke (E) zwischen den Nabenträger (8, 40) und die Auflageseite (P) des Trägers (2) eingeschoben ist.

4. Fahrwerk nach einem der vorhergehenden Ansprüche, **dadurch gekennzeichnet, dass** der Nabenhalter (8, 40), ebenso wie der Abstandhalter (6), falls er vorhanden ist, mit Befestigungsschrauben, die senkrecht zur Auflagefläche (P) dieses Trägers sind, an den Träger befestigt sind.

5. Fahrwerk nach Anspruch 4, **dadurch gekennzeichnet, dass** die gleichen Bohrungen (10) der Nabenträger (8, 40) sowohl für eine Montage jedes Nabenträgers der rechten als auch der linken Seite des Fahrzeugs dienen.

6. Kraftfahrzeug, umfassend ein Fahrwerk mit zwei Rädern, getragen jeweils von einem Drehzapfen (2) eines Nabenträgers (8, 40), **dadurch gekennzeichnet, dass** dieses Fahrwerk nach einem der vorhergehenden Ansprüche durchgeführt ist.

## Claims

1. A running gear, in particular for a motor vehicle, comprising two wheels each supported by a pivot (22) of a different hub carrier on the right (8) or left (40) side of the vehicle, which is connected to suspension elements of said gear, the dimensions of said hub carriers (8, 40) forming a particular wheel positioning geometry, **characterised in that** the two right (8) and left (40) hub carriers are capable of being interchanged in order to be mounted on the other side of the vehicle and to provide the gear with a different wheel positioning geometry such that, when interchanging the right (8) and left (40) hub carriers, each hub carrier is inverted in relation to a horizontal plane to produce an inversion between the top and bottom of this hub carrier, causing a double angle offset (α2) between the axis of the pivot (22) and the suspension elements, the hub carrier (8, 40) being attached to a support (2) connected to the suspension elements, this support comprising a supporting surface (P) accommodating this hub carrier (8, 40), the perpendicular of which is inclined in relation to a horizontal plane, at an angle (α1) defining a basic camber angle for the wheels, to which can be added or from which can be deducted the angle offset (α2).

2. A running gear according to claim 1, **characterised in that** the inversion in relation to the horizontal plane of the hub carrier (8, 40) when changing sides, leads to a height offset between the centre (26) of the pivot (22) and the suspension elements.

3. A running gear according to claim 1 or 2, **characterised in that** a spacer (6) having a constant thickness (E), is interposed between the hub carrier (8, 40) and the supporting surface (P) of the support (2).

4. A running gear according to any one of the previous claims, **characterised in that** the hub carrier (8, 40) and the spacer (6) where present, are attached to the support (2) by fixing screws perpendicular to the supporting surface (P) of this support.

5. A running gear according to claim 4, **characterised in that** the same borings (10) in the hub carriers (8, 40), are used indifferently from each other for mounting each hub carrier on the right or left side of the vehicle.

6. A motor vehicle comprising a running gear having two wheels, each supported by a pivot (2) of a hub carrier (8, 40), **characterised in that** said running gear is produced according to any one of the previous claims.
